# EUROPÄISCHE PATENTANMELDUNG

(11) **EP 3 306 469 A1**
(43) Veröffentlichungstag der Anmeldung: **11.04.2018**
(21) Anmeldenummer: 16192889.0
(22) Anmeldetag: 07.10.2016
(51) Int. Cl.: G06F 9/44

(54) **VERFAHREN ZUM ERZEUGEN EINER EQUIPMENT HIERARCHIE**

(71) Anmelder: Siemens Aktiengesellschaft, 80333 München (DE)
(72) Erfinder: Lutz, Benjamin, 76327 Pfinztal (DE)

(57) **Zusammenfassung**

Die Erfindung betrifft ein Verfahren zum Erzeugen einer Equipment Hierarchie (9), in welcher Prozessobjekte (10) strukturiert hinterlegt sind und welche eine technologische Sicht einer zu steuernden technischen Anlage repräsentiert. Es werden Maßnahmen vorgeschlagen, mittels welcher über den gesamten Lebenszyklus der Anlage hinweg eine kontinuierlich konsistente und objektorientierte Equipment Hierarchie (9) verfügbar ist, ohne dass diese dazu durch ein Engineering-System generiert und auf jedes Operator-System (3a, 3b, ...) neu geladen werden muss.

## Beschreibung

Die Erfindung betrifft ein Verfahren zum Erzeugen einer Equipment Hierarchie, in welcher Prozessobjekte strukturiert hinterlegt sind und welche eine technologische Sicht einer zu steuernden technischen Anlage repräsentiert. Darüber hinaus betrifft die Erfindung eine Anordnung gemäß dem Oberbegriff des Anspruchs 4 zur Durchführung des Verfahrens.

Prozessobjekte einer zu steuernden technischen Anlage, z. B. Prozessobjekte in Form von Messstellen, Tanks, Ventile, Sensoren, Aktuatoren, Continuous Function Charts (CFCs), Sequential Function Charts (SFCs), ..., werden gewöhnlich in einer so genannten Equipment Hierarchie (EQH) strukturiert, wobei ein Anwender diese Equipment Hierarchie zunächst mittels einer geeigneten Software eines Engineering-Systems erstellt. Anschließend wird die derart erstellte Equipment Hierarchie mittels des Engineering-Systems kompiliert und in Operator-Server von Operator-Systemen eines Prozessleitsystems geladen (Compile & Download), wobei zur Laufzeit der Operator-Systeme bzw. des Prozessleitsystems die Equipment Hierarchie als zentrale Anlaufstelle z. B. für einen Batchprozess oder zur Navigation bzw. zur Ermittlung eines Prozessobjektes innerhalb der Equipment Hierarchie genutzt wird.

Es kann nun vorkommen, dass die Struktur der Equipment Hierarchie geändert wird, weil ein Prozessobjekt - beispielsweise eine Messstelle - zu verschieben, zu löschen oder neu hinzuzufügen ist. Aufgrund einer derartigen Änderung ist es erforderlich, die geänderte Equipment Hierarchie wieder zu kompilieren und in die jeweiligen Server der Operator-Systeme zu laden. Dabei kann es während des Herunterladens zu Inkonsistenzen zwischen der geänderten Equipment Hierarchie und der gerade zur Laufzeit des Prozessleitsystems - z. B. während eines Batch-Prozesses - verwendeten Equipment Hierarchie kommen. Diese Inkonsistenzen können sich kritisch auf den laufenden zu steuernden Prozess auswirken. Im Übrigen steigt die Kommunikationslast, weil schon aufgrund geringfügiger Änderungen die Equipment Hierarchie in jedes Operator-System geladen werden muss.

Der Erfindung liegt daher die Aufgabe zugrunde ein Verfahren der eingangs genannten Art anzugeben, welches derartige Nachteile vermeidet. Darüber hinaus ist eine Anordnung gemäß dem Obergriff des Anspruchs 4 zu schaffen, die zur Durchführung des Verfahrens geeignet ist.

Diese Aufgabe wird im Hinblick auf das Verfahren durch die im kennzeichnenden Teil des Anspruchs 1 angegebenen, bezüglich der Anordnung durch die im Anspruch 4 angegebenen Maßnahmen gelöst.

Vorteilhaft ist, dass über den gesamten Lebenszyklus der Anlage hinweg eine kontinuierlich konsistente und objektorientierte Equipment Hierarchie verfügbar ist, ohne dass diese dazu durch eine Engineering Station generiert und auf jedes Operator-System neu geladen werden muss. Eine strukturelle Änderung einer Anlage und dadurch eine strukturelle Änderung der Equipment Hierarchie wirkt sich nur geringfügig auf das betroffene Operator System oder auf die betroffenen Operator Systeme aus, wobei dort nur der aktuelle Pfad des geänderten Prozessobjektes einzutragen ist.

In einer Ausgestaltung der Erfindung ist vorgesehen, dass mittels des Operator-Clients die Equipment Hierarchie und/oder die Teil-Equipment Hierarchien dargestellt werden. Ein Anwender kann sich dadurch die gesamte Equipment Hierarchie der Anlage oder nur eine oder mehrere Teil-Equipment Hierarchien darstellen lassen, die mittels des jeweiligen Operator-System erzeugt wurde.

Gemäß einer weiteren Ausgestaltung der Erfindung werden die Einträge der Pfadgaben mit Zeitstempeln versehen und archiviert. Dadurch werden die erzeugte Equipment Hierarchie und die Pfade eines jeden Prozessobjektes historienfähig.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Form
- Figur 1: Bestandteile eines Leitsystems,
- Figur 2: eine Equipment Hierarchie und
- Figur 3: die Überführung von Pfadeinträgen in eine Teil-Equipment Hierarchie.

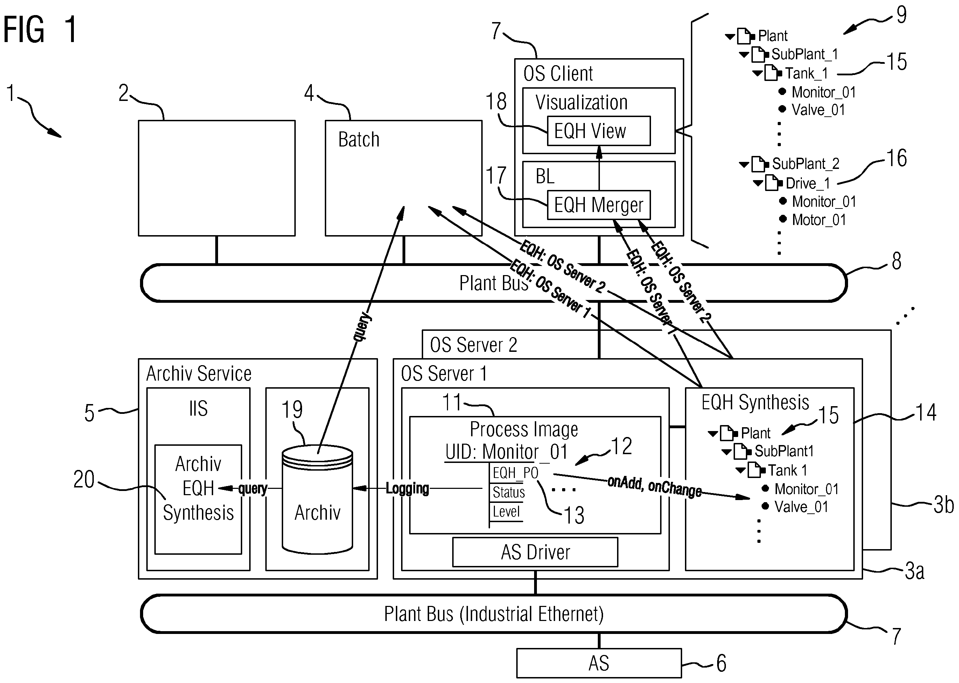

Die in den Figuren 1 bis 3 dargestellten gleichen Teile sind mit gleichen Bezugszeichen versehen.

In Figur 1 sind mit 1 Bestandteile eines Prozessleitsystems bezeichnet, welches im vorliegenden Ausführungsbeispiel ein Engineering-System 2, Operator-Server 3a, 3b, ..., einen Batch-System 4, einen Archiv-Server 5 sowie ein Automatisierungsgerät 6 und einen Operator-Client 7 umfasst. Das Prozessleitsystem 1 kann selbstverständlich eine Vielzahl von Automatisierungsgeräten aufweisen, die einerseits über einen Plant Bus 7 mit den Operator-Servern 3a, 3b, ... und andererseits über einen weiteren hier nicht dargestellten Bus mit dezentralen Peripherien verbunden sind, an welche eine Vielzahl von Feldgeräten (Sensoren, Aktuatoren) angeschlossen sind. Das Engineering-System 2, die Operator-Server 3a, 3b, ..., das Batch-System 4 und der Archiv-Server 5 kommunizieren über einen Terminal Bus 8, wobei das Engineering-System 2 und das Batch-System 4 gewöhnlich jeweils einen Server und einen Client umfassen. Zur besseren Übersicht sind im vorliegenden Ausführungsbeispiel die Server und Client als eine Einheit dargestellt. Ferner ist im vorliegenden Ausführungsbeispiel lediglich ein Operator-Client 7 dargestellt. Selbstverständlich können weitere OS-Clients vorgesehen sein, wobei gewöhnlich jeweils ein Operator-Server und ein Operator-Client ein Operator-System bzw. eine Operator-Station bilden.

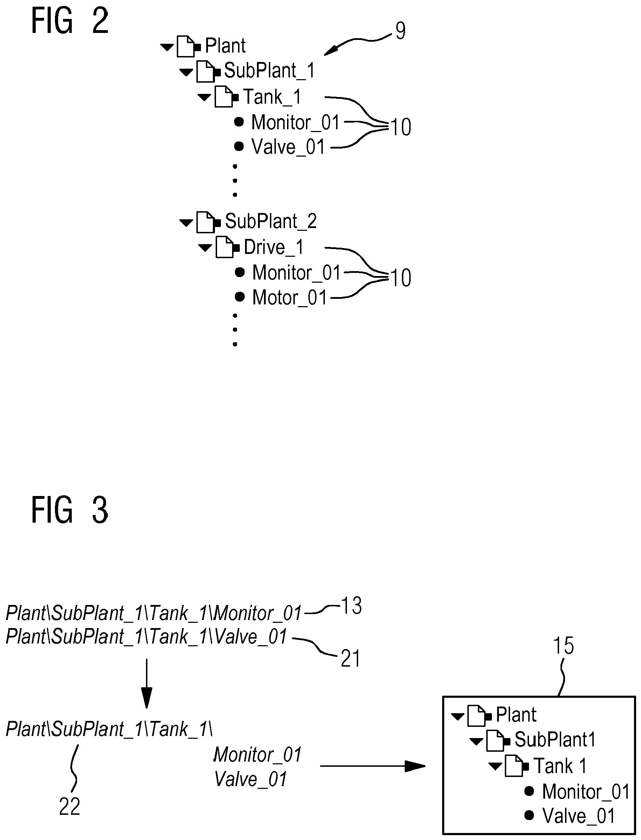

Ein Anwender erstellt mittels einer geeigneten Software des Engineerings-Systems 2 ein Equipment Hierarchie 9 (Figur 2), welche eine technologische Sicht einer zu steuernden technischen Anlage repräsentiert. In dieser Equipment Hierarchie 9 - im Folgenden auch als EQH bezeichnet - sind Prozessobjekte 10, beispielsweise Tanks, Ventile,..., strukturiert gemäß einer Baumstruktur eingetragen bzw. hinterlegt, wobei die Prozessobjekte 10 mehreren Teilanlagen der technischen Anlage zugeordnet sein können. Im vorliegenden Beispiel ist das Prozessobjekt 10 "Monitor_01" sowohl einer Teilanlage "SubPlant_1" als auch einer Teilanlage "SubPlant_02" zugewiesen.

Um aufgrund einer Änderung in der Equipment Hierarchie diese nicht neu in die Laufzeitumgebung des Prozessleitsystems 1 geladen werden muss, wird in die jeweilige Datenstruktur der Prozessobjekte im Prozessabbild der Operator-Server 3a, 3b, ... mittels des Engineering-Systems 2 eine Pfadangabe eingetragen. Im vorliegenden Ausführungsbeispiel ist in einem Prozessabbild 11 des Operator-Servers 3a in der Datenstruktur 12 für das Prozessobjekt 10 "Monitor_01" ein aktueller Pfad 13 eingetragen, welcher den Pfad dieses Prozessobjektes innerhalb der Equipment Hierarchie 9 beschreibt. Im Beispiel lautet der Pfad 13 (EQH_POI) "Plant\SubPlant_Tank_1\Monitor_01". Mittels der in den Datenstrukturen aller Prozessobjekte im Prozessabbild 11 des Operator-Servers 3a eingetragenen Pfadangaben erzeugt ein Software-Baustein "EQH-Synthesis" 14 für diesen Operator-Server 3a eine Teil-Equipment Hierarchie 15, wobei der Operator-Server 3a diese Teil-Equipment Hierarchie 15 dem Operator-Client 7 übermittelt. In der beschriebenen Art und Weise erzeugt eine EQH-Synthesis (nicht dargestellt) des Operator-Servers 3b eine Teil-Equipment Hierarchie mittels der in den Datenstrukturen aller Prozessobjekte im Prozessabbild (nicht dargestellt) des Operator-Servers 3b eingetragenen Pfadangaben, wobei der Operator-Server 3b diese Teil-Equipment Hierarchie ebenfalls dem Operator-Client 7 übermittelt. Im vorliegenden Ausführungsbeispiel wird angenommen, dass der Operator-Server 3b eine Teil-Equipment Hierarchie 16 dem Operator-Client 7 übermittelt hat, wobei ein Software-Baustein "EQH-Merger" 17 des Operator-Clients 7 die Teil-Equipment Hierarchien 15, 16 und die weiteren von den weiteren hier nicht dargestellten Operator-Servern Teil-Equipment Hierarchien zu der anlagenumfassende Equipment Hierarchie 9 verbindet. Ein Software-Baustein "EQH-View" 18 des Operator-Clients 7 ermöglicht, die Teil-Equipment Hierarchien 15, 16, ... und/oder die (Gesamt-)Equipment Hierarchie 9 auf einer Anzeige des Operator-Clients 7 darzustellen.

Für den Fall, dass ein Prozessobjekt im Engineering-System 2 geändert, gelöscht oder verschoben wird, ändert das Engineering-System 2 entsprechend den Eintrag bzw. die Pfadeingabe, wobei z. B. lediglich der alte Eintrag 13 in der Datenstruktur 12 im Operator-Server 3a überschrieben wird. Alle Komponenten, die mit diesem Operator-Server 3a in Wirkverbindung stehen, z. B. der Batch-Server 2 und der Operator-Client 7 werden entsprechend benachrichtigt und aktualisiert, wodurch jede dieser Automatisierungskomponenten mit einer kontinuierlich gepflegten Teil-Equipment Hierarchie und/oder je nach Komponentenart ( z. B. der OS-Client 7 ) mit einer kontinuierlich gepflegten Equipment Hierarchie versehen werden.

Es ist selbstverständlich auch möglich, dass mittels einer der Komponenten, z. B. mittels des Operator-Clients 7 oder des Batch-Systems 2, die Struktur der EQH 9 geändert wird, indem ein Prozessobjekt geändert, gelöscht oder verschoben wird. Wird z. B. das zu der Teil-EQH 15 gehörige Prozessobjekt 10 "Monitor_01" durch das Batch-System geändert, überschreibt das Batch-System 2 den aktuellen Pfad 13 in der Datenstruktur 12 im Operator-Server 3a. Auch in diesem Fall werden alle Komponenten, die mit diesem Operator-Server 3a in Wirkverbindung stehen entsprechend benachrichtigt und aktualisiert, wodurch diese Automatisierungskomponenten mit einer kontinuierlich gepflegten Teil-Equipment Hierarchie und/oder mit einer kontinuierlich gepflegten Equipment Hierarchie versehen werden.

Um z. B. im Kontext eines sogenannten "Audit Trails" die Änderung einer Anlagenstruktur nachvollziehen zu können, werden Änderungen an der EQH 9 archiviert. Ändert sich beispielweise die EQH-Struktur während eines Batchprozesses, so muss sichergestellt werden, dass das Batch-System auch auf historische EQH-Strukturen zugreifen kann. Um dies zu bewerkstelligen, werden der Eintrag 13 und alle weiteren derartigen Einträge in den Datenstrukturen der Prozessobjekte in den Prozessabbildern der Operator-Server 3a, 3b, ... in ein Archiv 18 des Archiv-Servers 5 hinterlegt, wobei ein dem Software-Baustein 14 entsprechender Software-Baustein "Archiv EQH-Synthesis" 20 mittels der archivierten Einträge die Teil-Equipment Hierarchien 15, 16, die Gesamt-Equipment Hierarchie 9 sowie deren zeitliche Veränderung reproduzieren werden können. Es ist somit nicht erforderlich, dass das Batch-System 2 seine eigene Historie führen muss. Dieses kann jederzeit für jedes Prozessobjekt einen aktuellen und konsistenten Pfad anlagenweit zur Abarbeitung der Chargenprozesse abfragen.

Im Folgenden wird auf Figur 3 verwiesen, in welcher die Überführung von Pfadeinträgen in Datenstrukturen - von Prozessobjekten im Prozessabbild 11 des Operator-Servers 3a - in eine Teil-Equipment Hierarchie dargestellt ist.

Der Software-Baustein 14 (EQH-Synthesis) erzeugt bzw. "faltet" aus der in der Datenstruktur 12 eingetragenen Pfadangabe 13 "Plant\SubPlant_Tank_1\Monitor_01"
und einer
Pfadangabe 21 "Plant\SubPlant_Tank_1\Valve_01",
die in einer hier nicht dargestellten Datenstruktur für das Prozessobjekt 10 (Valve_01) im Prozessabbild 11 eingetragen ist, zunächst eine Pfadstruktur 22, die lautet:
Plant\SubPlant_Tank_1\
   Monitor_01
   Valve_01

Anschließend überführt der Software-Baustein 14 (EQH-Synthesis) diese Pfadstruktur in die Teil-Equipment Hierarchie 15.

## Patentansprüche

1. Verfahren zum Erzeugen einer Equipment Hierarchie (9), in welcher Prozessobjekte (10) strukturiert hinterlegt sind und welche eine technologische Sicht einer zu steuernden technischen Anlage repräsentiert,
**dadurch gekennzeichnet, dass**
- auf Operator-Servern (3a, 3b, ...) jeweils ein Prozessabbild (11) hinterlegt wird, welches jeweils die Datenstrukturen (12) der Prozessobjekte (10) für den jeweiligen Operator-Server (3a, 3b, ...) aufweist,
- mittels eines Engineering-Systems (2) oder einer weiteren Automatisierungskomponente in die Datenstruktur (12) der jeweiligen Prozessobjekte (10) eine Pfadangabe (13) eintragen wird, die den aktuellen Pfad des jeweiligen Prozessobjektes (10) innerhalb der Equipment Hierarchie (9) beschreibt,
- zur Laufzeit durch den jeweiligen Operator-Server (3a, 3b, ...) mittels der Pfadangaben eine Teil-Equipment Hierarchie (15, 16) gebildet und einem Operator-Client (7) übermittelt wird,
- mittels des Operator-Clients (7) die Equipment Hierarchie (9) aus den Teil-Equipment Hierarchien (15, 16) erzeugt wird.

2. Verfahren nach Anspruch 1, **dadurch gekennzeichnet, dass** mittels des Operator-Clients (7) die Equipment Hierarchie (9) und/oder die Teil-Equipment Hierarchien (15, 16) dargestellt werden.

3. Verfahren nach Anspruch 1 oder 2, **dadurch gekennzeichnet, dass** die Einträge der Pfadgaben (13) mit Zeitstempeln versehen und archiviert werden.

4. Anordnung mit einem Engineering-System (2), einem Operator-Client (7) und Operator-Servern (3a, 3b, ...), wobei auf dem Operator-Client (7) eine Equipment Hierarchie (9) darstellbar ist, in welcher Prozessobjekte (10) strukturiert hinterlegt sind und welche eine technologische Sicht einer zu steuernden technischen Anlage repräsentiert, **dadurch gekennzeichnet, dass**
- auf den Operator-Servern (3a, 3b, ...) jeweils ein Prozessabbild (11) hinterlegt ist, , welches jeweils die Datenstrukturen (12) der Prozessobjekte (10) für den jeweiligen Operator-Server (3a, 3b, ...) aufweist,
- das Engineering-System (2) oder eine weitere Automatisierungskomponente der Anordnung dazu ausgebildet ist, in die Datenstruktur (12) der jeweiligen Prozessobjekte (10) eine Pfadangabe (13) einzutragen, die den aktuellen Pfad der jeweiligen Prozessobjekte (10) innerhalb der Equipment Hierarchie (9) beschreibt,
- der jeweilige Operator-Server (3a, 3b, ...) dazu ausgebildet ist, zur Laufzeit mittels der Pfadangaben eine Teil-Equipment Hierarchie (15, 16) zu bilden und dem Operator-Client (7) zu übermitteln,
- der Operator-Client (7) dazu ausgebildet ist, die Equipment Hierarchie (9) aus den Teil-Equipment Hierarchien (15, 16) erzeugen.

5. Anordnung nach Anspruch 4, **dadurch gekennzeichnet, dass** der Operator-Client (7) dazu ausgebildet ist, die Equipment Hierarchie (9) und/oder die Teil-Equipment Hierarchien (15, 16) darzustellen.

6. Anordnung nach Anspruch 4 oder 5, **dadurch gekennzeichnet, dass** die jeweiligen Operator-Server (3a, 3b, ...) dazu ausgebildet sind, die Einträge der Pfadgaben mit Zeitstempeln zu versehen und einem Archiv-Server (5) zu übermitteln.

7. Ein für eine Anordnung nach einem der Ansprüche 4 bis 6 ausgebildeter Operator-Server (3a, 3b, ...).

8. Ein für eine Anordnung nach einem der Ansprüche 4 bis 6 ausgebildeter Operator-Client (7).
